**Europäisches Patentamt**

**European Patent Office**

**Office européen des brevets**

(19)

(11) Veröffentlichungsnummer: **0 252 470 B1**

# EUROPÄISCHE PATENTSCHRIFT

(12)

(45) Veröffentlichungstag der Patentschrift:
22.08.90

(21) Anmeldenummer: 87109692.1

(22) Anmeldetag: 06.07.87

(51) Int. Cl.⁵: **B29C 67/22,** B29C 51/10,
B29C 51/26
// B29L31:58

(54) Verfahren und Formwerkzeug zum Herstellen von mit textilen Überzügen versehenen Polstern aus Schaumstoff.

(30) Priorität: 09.07.86 DE 3622951

(43) Veröffentlichungstag der Anmeldung:
13.01.88 Patentblatt 88/2

(45) Bekanntmachung des Hinweises auf die Patenterteilung:
22.08.90 Patentblatt 90/34

(84) Benannte Vertragsstaaten:
AT BE CH DE ES FR GB IT LI NL SE

(56) Entgegenhaltungen:
DE-A- 2 746 686
DE-C- 3 610 128
DE-C- 3 613 879
US-A- 3 377 103

(73) Patentinhaber: BAYER AG,
D-5090 Leverkusen 1 Bayerwerk(DE)

(72) Erfinder: Onnenberg, Volker, Dipl.-Ing., Schässburger
Gasse 2, D-5276 Drabenderhöhe(DE)
Erfinder: Busch, Ralf, Dr., Andreas-Gryphius-Strasse 5,
D-5000 Köln 80(DE)
Erfinder: Lindsey, John, Dr., 459 Austin Avenue,
Pittsburgh, PA 15243(US)

ACTORUM AG

**Beschreibung**

Die Erfindung betrifft ein Verfahren und ein Formwerkzeug zum Herstellen von mit textilen Überzügen versehenen Polstern aus Schaumstoff, wobei der textile Überzug in einen Formhohlraum eingelegt wird und unter Anwendung von Vakuum konturgetreu an die Formhohlraumwandung und an in den Formhohlraum ragende Stege angelegt wird, bevor ein Schaumstoff bildendes Reaktionsgemisch eingegeben und nach dessen Aushärten das Polster entformt wird.

Es ist bekannt, den textilen Überzug von Hand, gegebenenfalls unter Zuhilfenahme eines Spannrahmens, in einem Vakuumformwerkzeug zu positionieren. Dabei hat es sich als außerordentlich schwierig erwiesen, den Überzug an im Formhohlraum angeordnete Stege konturgetreu zum Anliegen zu bringen. Dies von Hand auszuführen, ist sehr zeitaufwendig. Deshalb hat man schon versucht, diesen Vorgang durch einen sogenannten Oberstempel, welcher den Überzug in den Formhohlraum hineindrücken soll, zu vereinfachen und zu beschleunigen. Der Oberstempel muß aber unter Zwischenlage des Überzuges ziemlich exakt in den Formhohlraum passen. Versetzt sich der Oberstempel beim Herabfahren, besteht Gefahr, daß der Überzug beschädigt wird. Bilden sich beim Eindrückvorgang Falten im Überzug, so werden diese für das Bedienungspersonal erst nach dem Zurückfahren des Oberstempels wahrnehmbar. Oft ist dann aber infolge der exakten Passung des Oberstempels der Überzug schon beschädigt worden. Schließlich bedeutet der Oberstempel auch eine Gefahrenquelle für das Bedienungspersonal beim Hantieren.

Es besteht die Aufgabe, ein Verfahren und ein Formwerkzeug der eingangs genannten Art derart zu verbessern, daß auch ein konturgetreues Anliegen des textilen Überzuges an im Formhohlraum vorhandene Stege erzielt wird, wobei dieser Vorgang schnell und für das Bedienungspersonal gefahrlos durchführbar sein soll.

Diese Aufgabe wird dadurch gelöst, daß der textile Überzug nach dem Einlegen zunächst mittels Vakuum vorgeformt und nach anschließendem Aufheben des Vakuums beidseitig konturgetreu gegen die Stege geklemmt wird, daß sodann - erforderlichenfalls unter weiterem Positionieren - der Überzug mittels Vakuum im Formhohlraum fixiert wird, daß nun erst die Klemmwirkung aufgehoben und das Reaktionsgemisch eingebracht wird.

Dadurch wird erreicht, daß das Bedienungspersonal den Klemmvorgang beobachten kann und notfalls den Vorgang unterbrechen und sofort wiederholen kann, sofern der textile Überzug verrutscht oder sich unerwünschte Falten bilden. Eine Beschädigung des Überzuges ist deshalb bei einigermaßen sorgfältiger Handhabung kaum möglich. Das neue Verfahren ist auch für einen weitgehend automatischen Ablauf geeignet. Die Klemmwirkung kann mechanisch, pneumatisch, hydraulisch, evtl. auch elektromagnetisch aufgebracht werden. Wie üblich kann man sich zusätzlich eines Spannrahmens bedienen, welcher ein lokales Nachgleiten des Überzuges aufgrund lokaler Regulierung des Anpreßdruckes erlaubt.

Gemäß einer besonderen Durchführungsform des neuen Verfahrens wird bei Vorhandensein mehrerer Stege der Überzug zunächst an dem (den) zentral gelegenen Steg(en) festgeklemmt und erst dann, in Richtung nach außen fortschreitend, an den weiteren Stegen festgeklemmt, wobei erforderlichenfalls zwischen den einzelnen Klemmvorgängen der Überzug gestrafft wird.

Auf diese Weise wird sichergestellt, daß der Überzug überall gleichmäßig straff ist. Ist zuviel Material vorhanden, so kann man es nach außen wegschieben; ist zu wenig vorhanden, so kann man es von außen nach innen nachziehen. Auf diese Weise läßt sich sowohl Faltenbildung als auch eine zu starke Spannung des Materials vermeiden.

In besonderen Fällen kann es bei entsprechender Geometrie des herzustellenden Polsters auch sinnvoll sein, mit dem Festklemmen des Überzuges an die Stege auf einer Seite des Formhohlraumes zu beginnen und damit zur anderen Seite hin fortzuschreiten.

Vorzugsweise wird der Überzug zunächst gegen eine Seite des Steges geklemmt und unter Aufrechterhaltung dieser Klemmwirkung zeitversetzt gegen die andere Seite geklemmt.

Auch diese Maßnahme dient der faltenfreien, straffen Positionierung des Überzuges im Formhohlraum.

Es ist also möglich, den Ablauf des Festklemmens zu programmieren, wobei man einen der jeweils vorgegebenen Geometrie entsprechenden optimalen Ablauf einstellt.

Das Formwerkzeug zum Herstellen von mit textilen Überzügen versehen Polstern aus Schaumstoff geht aus von einem Formhohlraum mit darin angeordneten Stegen, wobei die Wandung des Formhohlraumes und/oder die Stege Saugöffnungen aufweisen, welche mit einer Vakuumquelle verbunden sind.

Das Neue ist darin zu sehen, daß den Stegen eine Klemmvorrichtung zugeordnet ist, welche gegen die Stege wirkende Klemmbacken aufweist.

Gegenüber der Verwendung eines Oberstempels hat eine solche Klemmvorrichtung den besonderen Vorteil, daß das Bedienungspersonal den Klemmvorgang beobachten und bei Störungen sofort eingreifen kann. Das Bedienen der Klemmvorrichtung ist weit ungefährlicher als bei der Verwendung eines Oberstempels. Außerdem ist der Klemmvorgang weit weniger kraftaufwendig, da geringere Friktionskräfte auftreten als bei Verwendung eines Oberstempels.

Die Klemmvorrichtung läßt sich mit mechanischer, pneumatischer, hydraulischer oder gegebenenfalls auch elektromagnetischer Betätigung ausführen.

Vorzugsweise sind die Klemmbacken paarweise betätigbar.

Dabei ist sinnvollerweise jedem Steg mindestens ein Paar zueinanderweisende Klemmbacken zugeordnet. Auf diese Weise sind die Klemmbacken für jeden Steg zu einer geeigneten Zeit betätigbar.

Gemäß einer weiteren besonderen Ausführungsform sind die Klemmbacken zeitversetzt betätigbar.

Das heißt, wenn die Betätigung nicht von Hand ausgelöst wird, sind im Auslösemechanismus einer Steuerung Zeitrelais vorgesehen. Soll eine Klemmbacke eines Klemmbackenpaares zeitverzögert angreifen, so muß sich die Klemmvorrichtung selbstverständlich irgendwie abstützen können, damit die erste Klemmbacke Druck ausüben kann. Nachdem der Überzug erforderlichenfalls nachgestrafft worden ist, kann die zweite Klemmbacke betätigt werden. Das zeitversetzte Betätigen läßt sich also nicht nur auf Klemmbackenpaare anwenden, sondern auch ganz allgemein auf alle Klemmbacken einzeln.

Um die vorbeschriebenen Möglichkeiten vorteilhaft ausnutzen zu können, ist der Klemmvorrichtung ein Steuergerät zugeordnet.

In dieses Steuergerät wird ein Programm eingespeist, welches aufgrund von Versuchen einen optimalen Ablauf des Positioniervorganges des Überzuges im Formhohlraum gewährleistet. Ein solches Steuergerät besteht beispielsweise aus Impulsgebern, welche nacheinander die verschiedenen Klemmbacken in der vorgegebenen Reihenfolge auslösen. Zwischenintervalle sind gegebenenfalls erforderlich, damit nach jedem einzelnen Klemmvorgang der Überzug erst wieder zur Ruhe kommt und erforderlichenfalls nachgerichtet werden kann, bevor der nächste Klemmvorgang einsetzt. Selbstverständlich kann ein Unterbrecherschalter vorgesehen sein, so daß das Bedienungspersonal jederzeit in den Programmablauf eingreifen kann.

Es ist möglich, jedem Steg eine eigene Klemmvorrichtung oder mehreren bzw. allen Stegen eine gemeinsame Klemmvorrichtung zuzuordnen.

Welche Ausführungsform man wählt, hängt im wesentlichen von der vorgegebenen Geometrie des herzustellenden Polsters ab.

Besonders vorteilhaft ist es, die Klemmvorrichtung mit Zentrieranschlägen zu versehen.

Da die Klemmvorrichtung sowieso einen Tragrahmen für die Klemmbacken besitzen muß, ist es recht einfach, diesen mit den Zentrieranschlägen derart zu versehen, daß diese sich unter Zwischenlage des Überzuges am Rand des Formhohlraumes oder anderen geeigneten Zentrierpunkten abstützen. Dadurch wird dem Bedienungspersonal das mühevolle Ausrichten der Klemmvorrichtung von Hand erspart.

Es versteht sich, daß das Formwerkzeug auf einem Formwerkzeugträger positioniert sein kann und die Klemmvorrichtung dementsprechend an einer zum Formwerkzeugträger gehörigen Halterung über dem Formwerkzeug absenkbar angeordnet sein kann, so daß auch der Vorgang des Einsetzens und Entnehmens der Klemmvorrichtung aus dem Formwerkzeug völlig automatisiert werden kann.

Vorzugsweise ist dem Formwerkzeug ein Formstößel zugeordnet.

Mit ihm lassen sich Falten glätten und der Überzug an Hinterschneidungen anpressen, wo die Saugkraft des Vakuums nicht ausreicht. Er kann von Hand bedienbar sein, vorzugsweise ist er jedoch mittels einer Vorrichtung, welche z.B. hydraulisch oder pneumatisch arbeitet, steuerbar.

Schließlich ist es auch möglich, daß die Stege in den Formhohlraum ein- und ausfahrbar oder darin klappbar angeordnet sind.

Auch diese Maßnahmen dienen der besseren Konturtreue des Überzuges.

In der Zeichnung ist das neue Formwerkzeug in einem Ausführungsbeispiel rein schematisch dargestellt und nachstehend näher erläutert.

Es zeigen:

Fig. 1 die Draufsicht auf den Formhohlraum eines offenen Formwerkzeuges mit eingelegter Klemmvorrichtung,
Fig. 2 einen Schnitt durch die Klemmvorrichtung gemäß Linie A-B in Fig. 1 und
Fig. 3 das Schaltbild für die hydraulische Betätigung der Klemmvorrichtung gemäß Fig. 1

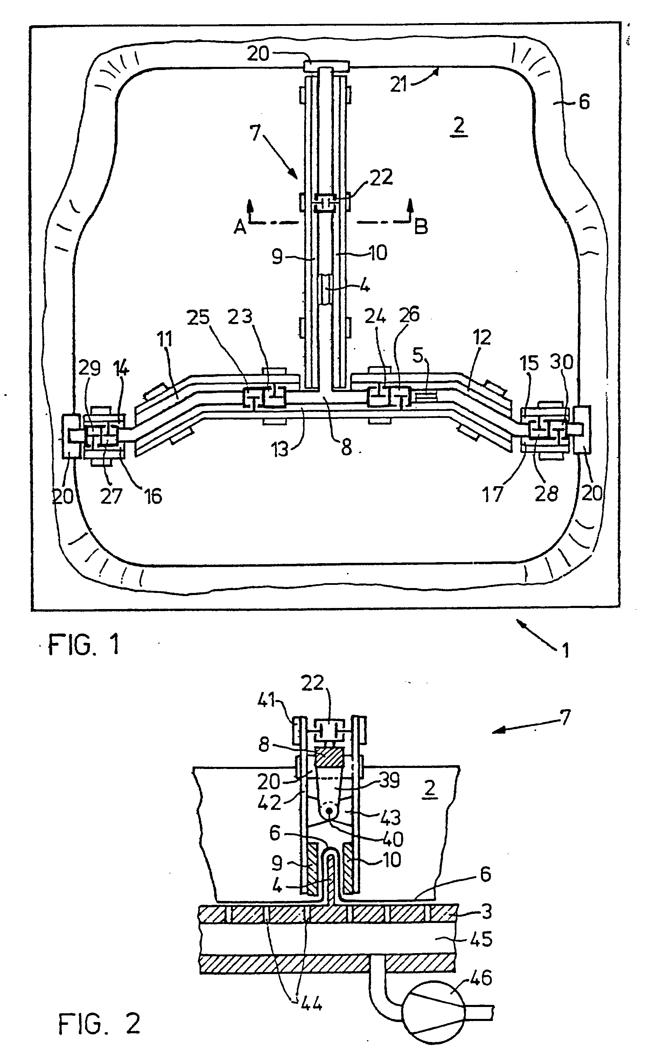

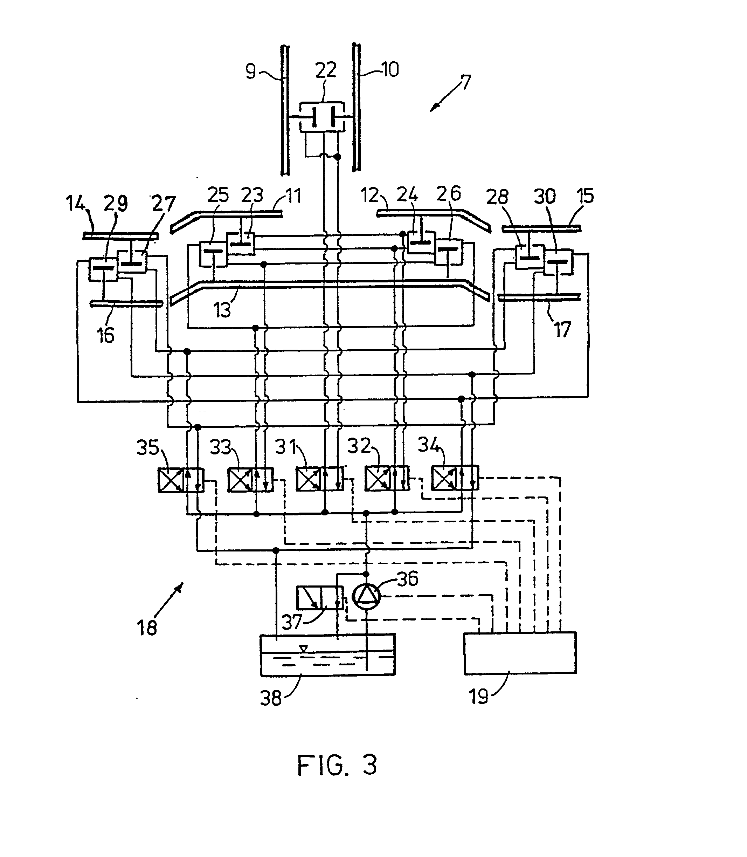

Die gesonderte Darstellung des Schaltbildes gemäß Fig. 3 gewährleistet sowohl in Fig. 1 als auch in Fig. 3 bessere Übersichtlichkeit, als wenn beides in einer einzigen Fig. dargestellt wäre.

Das Formwerkzeug 1 weist einen Formhohlraum 2 auf, an dessen Boden 3 Stege 4, 5 angeordnet sind. In den Formhohlraum 2 ist ein textiler Überzug 6 eingelegt. Ein Spannrahmen, welcher das gezielte Nachgleiten des Überzuges 6 gewährleistet, ist nicht dargestellt. In dem Formhohlraum 2 ist auf den textilen Überzug 6 eine Klemmvorrichtung 7 aufgesetzt. Diese besteht im wesentlichen aus einem Tragrahmen 8, Klemmbacken 9, 10, 11, 12, 13, 14, 15, 16, 17, einem hydraulischen System 18 und einem Steuergerät 19. Der Tragrahmen 8 weist Zentrieranschläge 20 auf, welche sich unter Zwischenlage des Überzuges 6 am Rand 21 des Formhohlraumes 2 abstützen. Am Tragrahmen 8 sind hydraulische Kolben-Zylinder-Einheiten 22, 23, 24, 25, 26, 27, 28, 29, 30 angeordnet. Die Kolben-Zylinder-Einheit 2 ist über die Klemmbacken 9, 10 dem Steg 4 zugeordnet. Es handelt sich hierbei um einen Zylinder mit zwei symmetrisch angeordneten Kolben, welche gleichzeitig beaufschlagbar sind. Dem Steg 5 sind über die Klemmbacken 11, 12 die parallel arbeitenden Kolben-Zylinder-Einheiten 23, 24 sowie über die Klemmbacke 13 die parallel arbeitenden Kolben-Zylinder-Einheiten 25, 26 zugeordnet. Den äußeren Aubschnitten des Steges 5 sind über die Klemmbacken 14, 15 die parallel arbeitenden Kolben-Zylinder-Einheiten 27, 28 und über die Klemmbacken 16, 17 die parallel arbeitenden Kolben-Zylinder-Einheiten 29, 30 zugeordnet. Diese Kolben-Zylinder-Einheiten 22, 23, 24, 25, 26, 27, 28, 29, 30 sind über Umschaltventile 31, 32, 33, 34, 35 und eine Hydraulikpumpe 36, welcher ein Rücklaufventil 37 zugeordnet ist, mit einem Hydraulikreservoir 38 über die aus Fig. 3 ersichtlichen Hydraulikleitungen verbunden. Die Umschaltventile 31, 32, 33, 34, 35 sowie das Rücklaufventil 37 und die Hydraulikpumpe 32 stehen mit dem Steuergerät 19 in Verbindung. Die Befestigung der Klemmbacken 9, 10, 11, 12, 13, 14, 15, 16, 17 am Tragrahmen 8 ist folgendermaßen:

Am Tragrahmen 8 sind Lagerzapfen 39 angeordnet, welche eine Achse 40 aufweisen. Die Kolben-Zylinder-Einheiten 22, 23, 24, 25, 26, 27, 28, 29, 30 wirken gegen Traversen 41, welche über Streben 42 mit den eigentlichen Klemmbacken 9, 10, 11, 12, 13, 14, 15, 16, 17 verbunden sind. Die Streben 42 sind mit Lagerzapfen 43 versehen, welche ebenfalls die Achse 40 umfassen. Im boden 3 des Formhohlraumes 2 sind Saugöffnungen 44 angeordnet, welche über einen Saugraum 45 an eine Vakuumquelle 46 angeschlossen sind.

Der Verfahrensablauf zum Herstellen eines Polsters mit textilen Überzug mit dem in der Zeichnung dargestellten und vorstehend beschriebenen Vakuumformwerkzeug ist folgender:

In den Formhohlraum 2 des Formwerkzeuges 1 wird ein textiler Überzug 6 eingelegt, mittels Spannrahmen fixiert und mittels Vakuum grob der Kontur des Formhohlraumes 2 und der Stege 4, 5 angepaßt. Sodann wird die Klemmvorrichtung 7 eingesetzt, wobei diese sich dank der Zentrieranschläge 20, welche sich am Rand 21 des Formhohlraumes 2 abstützen, selbst positioniert. Nun wird das Programm eingeleitet, indem das Steuergerät 19 der Hydraulikpumpe 36 Befehl gibt zu arbeiten. Zunächst fördert sie über das Rücklaufventil 37 zurück in das Reservoir 38, bis sich der Arbeitsdruck aufgebaut hat. Dann wird das Rücklaufventil 37 geschlossen und das Umschaltventil 31 so geschaltet, daß die Kolben-Zylinder-Einheit 22 im Sinne des Anpressens der Klemmbacken 9, 10 an den Steg 4 beaufschlagt wird. Mit dem Öffnen des Umschaltventils 32 werden die Kolben-Zylinder-Einheiten 23, 24 beaufschlagt und pressen die Klemmbacken 11, 12 gleichzeitig gegen den Steg 5. Erst danach erhält das Umschaltventil 33 vom Steuergerät 19 Befehl zum Beaufschlagen der Kolben-Zylinder-Einheiten 25, 26. Dadurch wird die Klemmback 13 gegen den Steg 5 gepreßt. Das Umschaltventil 34 erhält Befehl zum Öffnen und über die Kolben-Zylinder-Einheiten 27, 28 werden die Klemmbacken 14, 15 gegen den Steg 5 gepreßt. Mit einer Verzögerung von 4 Sekunden öffnet nun auch das Umschaltventil 35, so daß durch Beaufschlagen der Kolben-Zylinder-Einheiten 29, 30 die Stege 16, 17 gegen den Steg 5 gepreßt werden. Nun fährt mittels eine pneumatisch gesteuerten Vorrichtung ein Stößel entsprechende Punkte oder Zonen im Formhohlraum an, um eventuell im Überzug vorhandene Falten straffzuziehen, bzw. der Stößel drückt den Überzug in Hinterschneidungen. Nun erzeugt die Vakuumquelle 46 Unterdruck, so daß der Überzug 6 vollends der Kontur des Formhohlraumes 2 angepaßt wird, wobei an exponierten Stellen, wie z.B. den Ecken, erforderlichenfalls manuell nachgeholfen wird. Ist nunmehr der Überzug 6 konturgerecht im Formhohlraum 2 fixiert, gibt das Steuergerät 29 an alle Umschaltventile 31, 32, 33, 34, 35 Befehlt zum Umschalten, wodurch die Kolben-Zylinder-Einheiten 22, 23, 24, 25, 26, 27, 28, 29, 30 in entgegengesetzter Richtung beaufschlagt werden und dadurch die Klemmwirkung der Klemmbacken 9, 10, 11, 12, 13, 14, 15, 16, 17 aufgehoben wird. Die Klemmvorrichtung 7 wird nun entfernt und ein Mischkopf über dem Formhohlraum 2 positioniert, welcher ein aus Polyol und Isocyanat bestehendes, Schaumstoff bildendes Reaktionsgemisch auf die Rückseite des textilen Überzuges 6 in den Formhohlraum 2 eingibt. Anschließend wird das Formwerkzeug 1 sofort mit einem Deckel verschlossen und der auftreibende Schaumstoff aushärten gelassen. Nach dem Aushärten wird das Formwerkzeug 1 geöffnet, das fertige Produkt entnommen und das Formwerkzeug 1 steht für einen neuen Arbeitzyklus bereit.

## Patentansprüche

1. Verfahren zum Herstellen von mit textilen Überzügen (6) versehenen Polstern aus Schaumstoff, wobei der textile Überzug (6) in einen Formhohlraum (2) eingelegt wird und unter Anwendung von Vakuum konturgetreu an die Formhohlraumwandung (3) und an in den Formhohlraum (2) ragende Stege (4, 5) angelegt wird, bevor ein Schaumstoff bildendes Reaktionsgemisch eingegeben und nach dessen Aushärten das Polster entformt wird, dadurch gekennzeichnet, daß der textile Überzug (6) nach dem Einlegen zunächst mittels Vakuum vorgeformt und nach anschließendem Aufheben des Vakuums beidseitig konturgetreu gegen die Stege (4, 5) geklemmt wird, daß sodann - erforderlichenfalls unter weiterem Positionieren - der Überzug (6) mittels Vakuum im Formhohlraum (2) fixiert wird, daß nun erst die Klemmwirkung aufgehoben und das Reaktionsgemisch eingebracht wird.

2. Verfahren nach Anspruch 1, dadurch gekennzeichnet, daß bei Vorhandensein mehrerer Stege (4, 5) der Überzug (6) zunächst an dem (den) zentral gelegenen Steg(en) (4) festgeklemmt wird und erst dann, in Richtung nach außen forschreitend, an den weiteren Stegen (5) festgeklemmt wird, wobei erforderlichenfalls zwischen den einzelnen Klemmvorgängen der Überzug (6) gestrafft wird.

3. Verfahren nach Anspruch 1 oder 2, dadurch gekennzeichnet, daß der Überzug (6) zunächst gegen eine Seite des Steges (5) geklemmt und unter Aufrechterhaltung dieser Klemmwirkung zeitversetzt gegen die andere Seite geklemmt wird.

4. Formwerkzeug (1) zum Herstellen von mit textilen Überzügen (6) versehenen Polstern aus Schaumstoff, bestehend aus einem Formhohlraum (2) mit darin angeordneten Stegen (4, 5), wobei die Wandung (3) des Formhohlraumes (2) und/oder die Stege (4, 5) Saugöffnungen (44) aufweisen, welche mit einer Vakuumquelle (46) verbunden sind, dadurch gekennzeichnet, daß den Stegen (4, 5) eine Klemmvorrichtung (7) zugeordnet ist, welche gegen die Stege (4, 5) wirkende Klemmbacken (9, 10, 11, 12, 13, 14, 15, 16, 17) aufweist.

5. Formwerkzeug nach Anspruch 4, dadurch gekennzeichnet, daß die Klemmbacken (9, 10, 11, 12, 13, 14, 15, 16, 17) paarweise betätigbar sind.

6. Formwerkzeug nach Anspruch 4 oder 5, dadurch gekennzeichnet, daß die Klemmbacken (9, 10, 11, 12, 13, 14, 15, 16, 17) zeitversetzt betätigbar sind.

7. Formwerkzeug nach einem der Ansprüche 4, 5 oder 6, dadurch gekennzeichnet, daß der Klemmvorrichtung (7) ein Steuergerät (19) zugeordnet ist.

8. Formwerkzeug nach einem der Ansprüche 4 bis 7, dadurch gekennzeichnet, daß jedem Steg (9, 10, 11, 12, 13, 14, 15, 16, 17) eine eigene Klemmvorrichtung (7) zugeordnet ist.

9. Formwerkzeug nach einem der Ansprüche 4 bis 7, dadurch gekennzeichnet, daß mehreren Stegen (9, 10, 11, 12, 13, 14, 15, 16, 17) eine gemeinsame Klemmvorrichtung (7) zugeordnet ist.

10. Formwerkzeug nach einem der Ansprüche 4 bis 9, dadurch gekennzeichnet, daß die Klemmvorrichtung (7) mit Zentrieranschlägen (20) versehen ist.

11. Formwerkzeug nach einem der Ansprüche 4 bis 10, gekennzeichnet durch die Zuordnung eines Formstößels.

## Revendications

1. Procédé pour la fabrication de coussins en mousse pourvus d'un revêtement textile (6) dans lequel le revêtement textile (6) est inséré dans une cavité de formage (2) et est appuyé contre les parois de la cavité de formage (3) et contre les nervures (4, 5) faisant saillie dans la cavité de formage (2) en suivant fidèlement les contours, grâce à l'utilisation de vide, un mélange réactionnel formant une mousse est ensuite introduit et le coussin est démoulé après durcissement de ce mélange, caractérisé en ce que le revêtement textile (6) est tout d'abord préformé après son placement sous l'effet du vide, et est serré ensuite après suppression du vide, des deux côtés contre les nervures (4, 5) en suivant leur profil, que le revêtement (6) est fixé ensuite sous l'effet du vide dans la cavité de formage (2), au besoin avec positionnement supplémentaire, que l'effet de serrage est supprimé alors puis que le mélange réactionnel est introduit.

2. Procédé selon la revendication 1, caractérisé en ce qu'il existe plusieurs nervures (4, 5), le revêtement (6) est d'abord serré contre la ou les nervure(s) centrale(s) (4) et est serré ensuite contre les autres nervures (5) en progressant en direction de l'extérieur, tandis que le revêtement (6) est relissé au besoin entre les différentes opérations de serrage.

3. Procédé selon la revendication 1 ou 2, caractérisé en ce que le revêtement (6) est serré tout d'abord contre un côté de la nervure (5) et est serré ensuite avec retard contre l'autre, tandis que le premier effet de serrage est maintenu.

4. Outil de forme (1) pour fabriquer des coussins en mousse pourvus de revêtements textiles (6), constitué d'une cavité de formage (2) contenant des nervures (4, 5), tandis que la paroi (3) de la cavité de formage (2) et/ou les nervures (4, 5) présentent des orifices d'aspiration (44) qui sont connectées à une source de vide (46), caractérisé en ce que les nervures (4, 5) sont desservies par un dispositif de serrage (7) qui présente des mâchoires de serrage (9, 10, 11, 12, 13, 14, 15, 16, 17) agissant contre les nervures (4, 5).

5. Outil de forme selon la revendication 4, caractérisé en ce que les mâchoires de serrage (9, 10, 11, 12, 13, 14, 15, 16, 17) peuvent être commandées par paire.

6. Outil de forme selon la revendication 4 ou 5, caractérisé en ce que les mâchoires de serrage (9, 10, 11, 12, 13, 14, 15, 16, 17) peuvent être actionnées avec décalage dans le temps.

7. Outil de forme selon l'une des revendications 4, 5 ou 6, caractérisé en ce que le dispositif de serrage (7) est commandé par un appareil de commande (19).

8. Outil de forme selon l'une des revendications 4 à 7, caractérisé en ce que chaque nervure (9, 10, 11, 12, 13, 14, 15, 16, 17) est desservie par son propre dispositif de serrage (7).

9. Outil de forme selon l'une des revendications 4 à 7, caractérisé en ce que plusieurs nervures (9, 10, 11, 12, 13, 14, 15, 16, 17) sont desservies par un dispositif de serrage commun (7).

10. Outil de forme selon l'une des revendications 4 à 9, caractérisé en ce que le dispositif de serrage (7) est pourvu de butées de centrage (20).

11. Outil de forme selon l'une des revendications 4 à 10, caractérisé par son fonctionnement en combinaison avec un poinçon de formage.

## Claims

1. A method of making foam cushions provided with textile coverings (6), the textile covering (6) being placed in a mould cavity (2) and being applied in a vacuum to the wall (3) of the mould cavity and to webs (4, 5) projecting into the mould cavity (2), following the contours thereof, before a foam-forming reaction mixture is introduced and the cushion being demoulded after curing of the reaction mixture, characterized in that, after it has been placed in the mould cavity, the textile covering (6) is first preformed and, after subsequent removal of the vacuum, is clamped against the webs (4, 5) on both sides, following the contours thereof, in that the covering (6) is then fixed in the mould cavity (2) by vacuum, if necessary with further positioning, in that the clamping effect is then removed and the reaction mixture is introduced.

2. A process as claimed in claim 1, characterized in that, where several webs (4, 5) are present, the covering (6) is first clamped firmly against the central web(s) (4) and only then against the other webs (5), progressing outwards, the covering (6) if necessary being stretched between the individual clamping operations.

3. A process as claimed in claim 1 or 2, characterized in that the covering (6) is first clamped against one side of the web (5) and, while this clamping effect is maintained, is subsequently clamped against the other side.

4. A mould (1) for making foam cushions provided with textile coverings (6), consisting of a mould cavity (2) with webs (4, 5) arranged therein, the wall (3) of the mould cavity (2) and/or the webs (4, 5) comprising suction openings (44) connected to a vacuum source (46), characterized in that a clamping mechanism (7) is associated with the webs (4, 5), comprising clamping jaws (9, 10, 11, 12, 13, 14, 15, 16, 17) acting against the webs (4, 5).

5. A mould as claimed in claim 4, characterized in that the clamping jaws (9, 10, 11, 12, 13, 14, 15, 16, 17) are designed for actuation in pairs.

6. A mould as claimed in claim 4 or 5, characterized in that the clamping jaws (9, 10, 11, 12, 13, 14, 15, 16, 17) are designed for staggered actuation.

7. A mould as claimed in claim 4, 5 or 6, characterized in that a control unit (19) is associated with the clamping mechanism (7).

8. A mould as claimed in any of claims 4 to 7, characterized in that a separate clamping mechanism (7) is associated with each web (9, 10, 11, 12, 13, 14, 15, 16, 17).

9. A mould as claimed in any of claims 4 to 7, characterized in that a single clamping mechanism (7) is associated with several webs (9, 10, 11, 12, 13, 14, 15, 16, 17).

10. A mould as claimed in any of claims 4 to 9, characterized in that the clamping mechanism (7) is provided with centering stops (20).

11. A mould as claimed in any of claims 4 to 10, characterized by the association of a mould ram.

FIG. 1

FIG. 2

FIG. 3